Europäisches Patentamt

European Patent Office

Office européen des brevets

(19)

(11) **EP 1 576 338 B1**

(12) **FASCICULE DE BREVET EUROPEEN**

| | |
|---|---|
| (45) Date de publication et mention de la délivrance du brevet: **03.05.2006 Bulletin 2006/18** | (51) Int Cl.: **G01B 11/06** *(2006.01)* |
| (21) Numéro de dépôt: **03810008.7** | (86) Numéro de dépôt international: **PCT/FR2003/050198** |
| (22) Date de dépôt: **22.12.2003** | (87) Numéro de publication internationale: **WO 2004/059246 (15.07.2004 Gazette 2004/29)** |

(54) **PROCEDE D'ETUDE DES RELIEFS D'UNE STRUCTURE PAR VOIE OPTIQUE**

OPTISCHES VERFAHREN ZUR UNTERSUCHUNG VON RELIEFS EINER STRUKTUR

OPTICAL METHOD OF EXAMINING RELIEFS ON A STRUCTURE

| | |
|---|---|
| (84) Etats contractants désignés: **AT BE BG CH CY CZ DE DK EE ES FI FR GB GR HU IE IT LI LU MC NL PT RO SE SI SK TR** | (72) Inventeur: **HAZART, Jérôme F-38000 Grenoble (FR)** |
| (30) Priorité: **23.12.2002 FR 0216526** | (74) Mandataire: **Poulin, Gérard BREVALEX 3, rue du Docteur Lancereaux 75008 Paris (FR)** |
| (43) Date de publication de la demande: **21.09.2005 Bulletin 2005/38** | (56) Documents cités: |
| (73) Titulaire: **COMMISSARIAT A L'ENERGIE ATOMIQUE 75752 Paris Cédex 15 (FR)** | **WO-A-02/27288**     **US-A- 5 900 633** <br> **US-A- 5 963 329**     **US-A1- 2002 113 966** <br> **US-A1- 2002 188 580**     **US-B1- 6 462 817** <br> **US-B1- 6 483 580** |

EP 1 576 338 B1

## Description

La présente invention a trait à un procédé d'étude d'une structure par voie optique pour un contrôle dimensionnel de ses reliefs. De tels procédés trouvent application dans la caractérisation géométrique de motifs espacés régulièrement, mais que leurs dimensions microscopiques rendent peu accessibles aux procédés de mesure directe, comme les lignes de relief en microélectronique.

Le terme anglais de "scatterometry" est souvent utilisé dans l'art pour désigner des procédés où la surface à étudier reçoit un rayonnement qu'elle réfléchit en donnant un spectre diffracté en fonction des reliefs. Le spectre de mesure est recueilli et affiché sur un support graphique. On ne peut l'exploiter pour en déduire directement les caractéristiques des reliefs, et c'est pourquoi on procède à des comparaisons du spectre à des spectres de référence obtenus pour des surfaces aux reliefs connus : si le spectre de mesure est proche d'un des spectres de référence, son relief ressemblera à celui qui a donné naissance à ce spectre de référence. Les spectres de référence peuvent être tirés d'une bibliothèque ou d'essais de simulations de la diffraction de modèles aux reliefs paramétrés de la surface. Ce deuxième genre de procédés est itératif en faisant varier les paramètres pour converger vers la solution. Les brevets US 5 739 909 et 5 867 276 sont relatifs à des procédés d'étude d'une surface par réflectométrie. D'autre documents sont connus dans l'art.

Par exemple, les documents WO 02/27288, US 6 483 580, US 5 900 633 et US 6 462 817 divulguent des procédés, dans lesquels on mesure un spectre de réflexion et on compare des points du spectre à des points homologues d'un spectre d'essai afin de déterminer des paramètres (hauteur, largeur etc.) d'une modélisation du relief. Dans ces documents on utilise pour la comparaison avec le spectre d'essai des gammes sélectionnées (et donc des points sélectionnés) du spectre où la sensibilité par rapport à un ou plusieurs paramètres est particulièrement haute.

Certaines difficultés doivent être affrontées dans ce genre de procédés. Il est manifeste qu'une bibliothèque assez fournie est nécessaire pour donner une estimation précise des reliefs. Les procédés itératifs sont sujets à des imprécisions de modélisation et à des difficultés de converger vers la solution correcte. Il en résulte des temps de calculs excessifs.

L'invention offre un perfectionnement aux mesures de reliefs d'une surface par réflectométrie, et plus précisément à la seconde famille de procédés mentionnée où des simulations du relief et des spectres sont faites. Elle permet d'obtenir de meilleures corrélations entre le spectre mesuré et les spectres d'essai successifs.

Elle peut être définie, sous sa forme la plus générale, par un procédé d'étude d'une surface par réflectrométrie, comprenant des étapes de projection d'un rayonnement sur la surface, de recueil d'un spectre de mesure du rayonnement après une réflexion d'un rayonnement sur la surface et d'affichage du spectre sur un support graphique, comprenant encore des étapes de sélection de points du spectre, les points pouvant être joints par des lignes approchant le spectre, et de recherche de reliefs de la surface par des comparaisons des points sélectionnés du spectre de mesure à des points homologues d'un spectre d'essai, le spectre d'essai provenant d'une réflexion simulée du rayonnement sur une surface d'essai résultant d'une modélisation du relief exprimée par des paramètres, et comprenant des ajustements des comparaisons et du spectre d'essai par des ajustements des paramètres, caractérisé en ce que les paramètres sont ajustés successivement dans un ordre déterminé par une sensibilité du spectre d'essai audits paramètres, le ou les paramètres les plus influents sur ledit spectre étant ajustés en premier lieu et ainsi de suite. De préférence, le relief est modélisé par un empilement de tranches exprimées par des paramètres dont un nombre de tranches dans l'empilement et des hauteurs et des largeurs des sections de tranches, le nombre et les hauteurs et largeurs étant déterminés à partir d'une erreur totale et d'une constante de propagation du rayonnement. L'erreur pour chaque tranche peut être définie par l'intégrale sur une hauteur de la tranche, de la valeur absolue de la différence entre la constante de propagation du relief et la constante de propagation moyenne de la tranche. La somme des erreurs de toutes les tranches, d'après un critère possible, doit être inférieure ou égale à une valeur admissible.

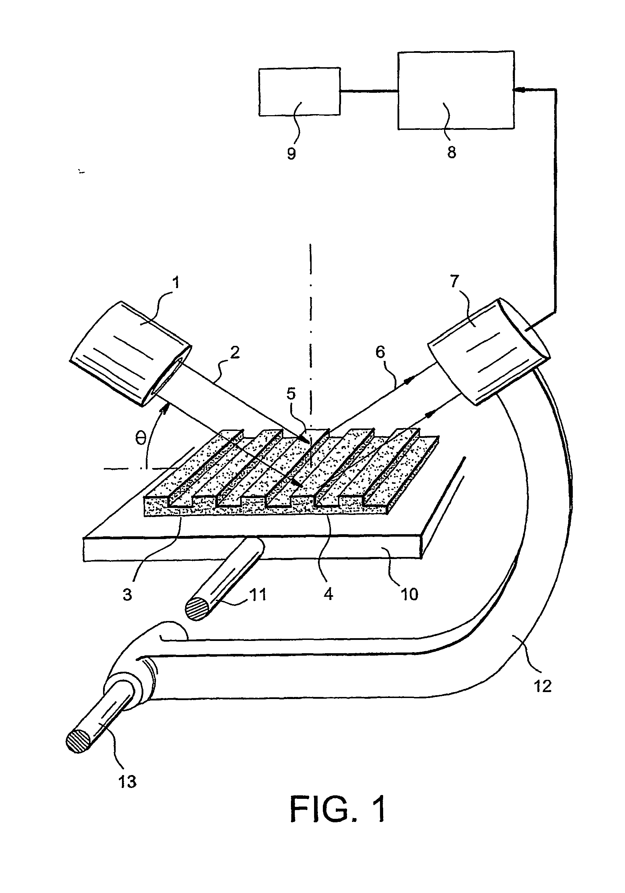

L'invention sera maintenant décrite plus complètement en liaison aux figures. La figure 1 illustre un dispositif d'étude, la figure 2 un organigramme du procédé, la figure 3 un spectre de mesure et les figures 4 et 5 certaines techniques d'étude.

Une source lumineuse 1 pouvant consister en un laser prolongé par une fibre optique projette un rayon lumineux incident 2 vers un échantillon 3 consistant en un substrat 4 strié et dont des reliefs en saillie forment des arêtes 5 linéaires sur la face supérieure qu'on étudie. Le rayon lumineux incident 2 est réfléchi sur l'échantillon 3 en un rayon lumineux réfléchi 6 dont la direction est symétrique par rapport à la normale au substrat 4 au point d'illumination et qui aboutit à un spectromètre 7. En pratique, plusieurs dizaines des arêtes 5 sont atteintes à la fois pour le rayon lumineux et contribuent à la fois à la mesure. L'installation comprend encore schématiquement un système de commande 8 dont une des fonctions est de recueillir les mesures par le spectromètre 7, et aussi de les retransmettre à une interface graphique 9 que consulte l'utilisateur. Certaines autres possibilités de l'installation ne sont qu'esquissées. C'est ainsi qu'il est possible d'incliner l'échantillon 3 en faisant tourner un plateau 10 sur lequel le substrat 4 est collé en commandant une rotation d'un axe 11 de support du plateau 10. On commande alors aussi une rotation du spectromètre 7 d'un angle double pour continuer de recevoir des mesures, en déplaçant un bras coudé 12 sur lesquels il est monté autour d'un axe 13 coaxial ou précédent. Ces mouvements sont assurés par le système de commande 8. L'opérateur dispose aussi d'un clavier ou d'éléments équivalents pour agir sur l'installation par l'intermédiaire du système de commande 8. On désigne par θ l'angle d'incidence du rayon lumineux d'incident 2 sur l'échantillon 3, par λ la longueur d'onde de la lumière et par p l'angle de polarisation de celle-ci. Les mesures par réflétrométrie peuvent prendre des aspects différents selon le paramètre qu'on fait varier pour avoir non un point de mesure unique mais un spectre complet. On décrira ici plus complètement une mesure dite spectroscopique, où le spectre est obtenu en faisant varier la longueur d'onde λ dans une plage assez large, mais les mesures dites goniométriques, où varie l'angle d'incidence θ, sont aussi très courantes pour donner un autre spectre. L'application de l'invention n'est pas affecté par la catégorie du spectre.

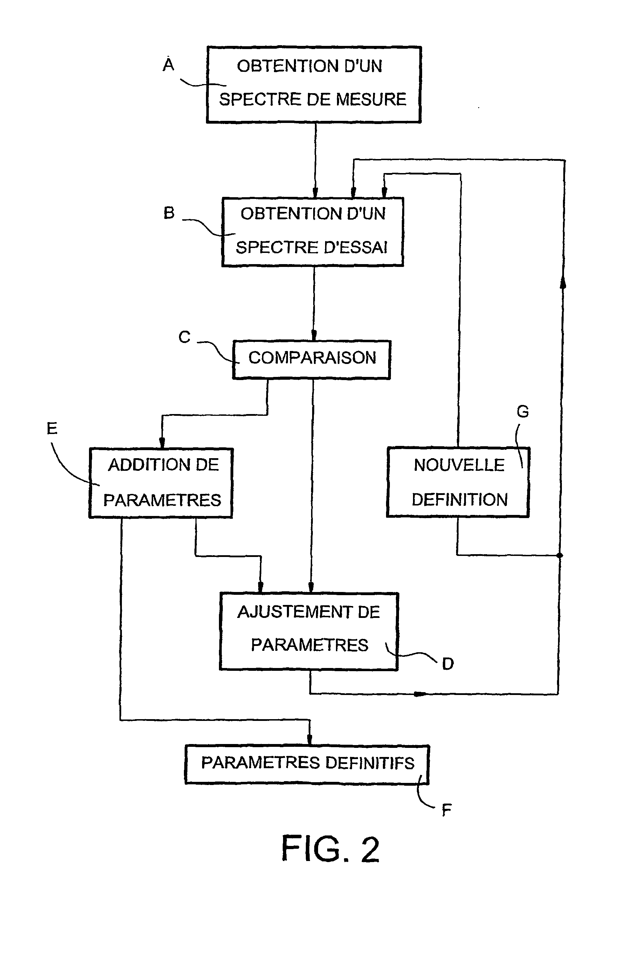

On se reporte maintenant à la figure 2 pour la description générale du procédé utilisé. L'étape A consiste à obtenir un spectre de mesure de la façon qu'on vient d'indiquer. L'étape suivante B consiste à obtenir un spectre d'essai qui est comparé au précédent à l'étape suivante C. Un paramètre de l'échantillon 3 sera alors ajusté à l'étape suivante D avec l'espoir d'améliorer la comparaison, et on reviendra à l'étape B et aux suivantes jusqu'à être parvenu à une comparaison optimale. L'étape C sera suivie alors d'une étape E d'addition de paramètres qui seront ajustés, et on recommencera une série de cycles des étapes D, B et C jusqu'à ce que les nouveaux paramètres soient optimisés eux aussi. On procédera de même jusqu'à avoir considéré tous les paramètres, après quoi une solution du système sera atteinte et les valeurs des paramètres seront fournies à l'utilisateur selon l'étape F. Après un ajustement (D), il sera aussi possible occasionnellement de commander une nouvelle définition du modèle à l'étape G avant de revenir à l'étape B.

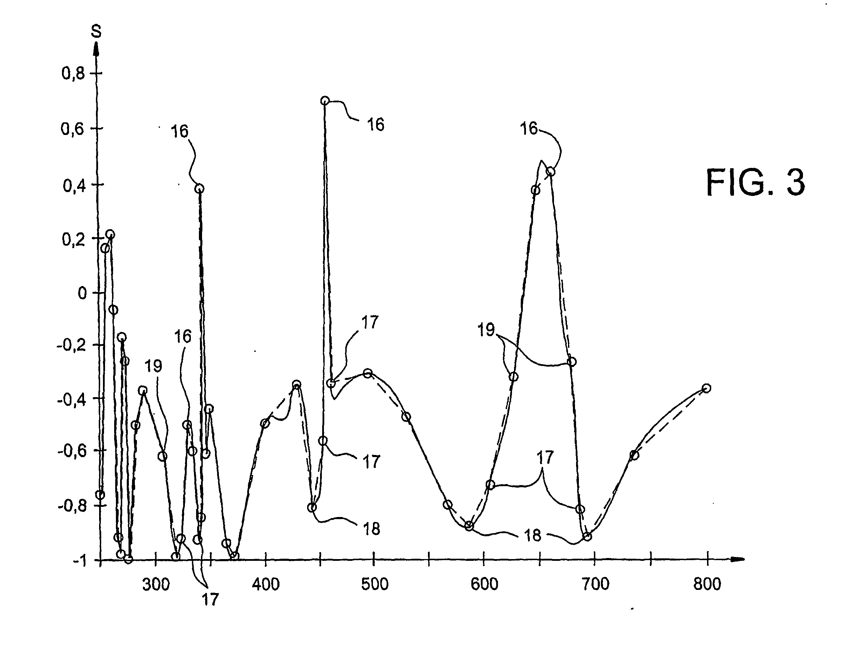

Nous nous intéressons maintenant à l'étape A du procédé. Il s'agit d'un aspect essentiel puisqu'il permet de réduire énormément les temps de calcul nécessaires à la corrélation par itérations successives. Le spectre ici représenté est une intensité lumineuse en fonction de la longueur d'onde λ. On ne considèrera que quelques points de ce spectre, notamment ceux, notés par 16, qui sont situés aux sommets de pics du spectre, d'autres points notés 17 situés à la base de ces pics, le cas échéant des points 18 situés dans des vallées du spectre si celles-ci sont accusées ; des points intermédiaires aux précédents, notés 19, peuvent aussi sélectionnés. On cherche à obtenir une très bonne adéquation entre le spectre réel de mesure et un spectre fictif défini par des lignes joignant les points sélectionnés successifs. La représentation de la figure 3 montre qu'on peut y parvenir avec un nombre de points réduit ; des vérifications peuvent être entreprises en calculant l'écart général entre le spectre de mesure et le spectre défini par les points sélectionnés. Une autre possibilité, à laquelle il est facile de recourir bien qu'on ne le fasse pas avec l'exemple de la figure 3, est de ne considérer qu'une partie jugée intéressante du spectre et de négliger complètement le reste dans les corrélations. Des points appartenant à des régions différentes, comme les sommets et les bases de pics, devraient pourtant être conservés pour offrir une base de comparaison sûre.

Dans d'autres modes de réalisation de l'invention, des approximations différentes mais satisfaisantes du spectre sont atteintes par un échantillonnage régulier du spectre sur la plage des longueurs d'onde ou en énergie.

Nous passons maintenant à une description de l'obtention des spectres d'essai et de leur ajustement.

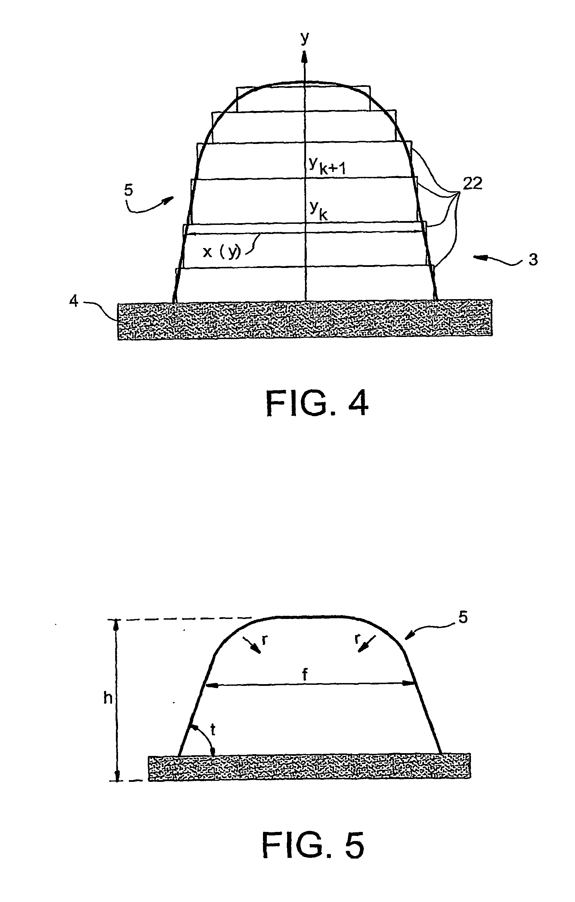

D'après la figure 4, les arêtes 5 peuvent être assimilées à un empilement de tranches 22 superposées et de largeurs différentes que traverse la lumière selon un mode de propagation determiné dépendant de l'angle d'incidence. Cette décomposition en tranches 22 sert de modèle pour obtenir les spectres d'essai par une simulation. Dans la méthode la plus courante, les tranches 22 sont supposées être de largeur uniforme, donc de section rectangulaire et leur épaisseur est choisie arbitrairement. Chacune des tranches 22 possède alors une constante de propagation de la lumière uniforme notée $\beta_k$, où k est l'indice de la tranche 22 considérée. Cette constante de propagation exprime la vitesse de propagation de la lumière à travers la tranche 22 selon le mode de propagation qui prévaut. Une erreur systématique est toutefois commise puisque le relief a en réalité une largeur variable dans les tranches 22. Cette erreur peut être exprimée par les formules :

$$e_k = \int_{y_k}^{y_{k+1}} |\bar{\beta}_k - \beta(y)| dy$$

$$\bar{\beta}_k = \frac{1}{y_{k+1} - y_k} \int_{y_k}^{y_{k+1}} \beta(y) dy$$

où $y_k$ et $y_{k+1}$ sont les hauteurs extrêmes de la tranche 22, et $\beta(y)$ la constante réelle de propagation de la lumière à toute hauteur y, calculée d'après la largeur locale $x(y)$ du relief entre les flancs de l'arête 5, et $\bar{\beta}_k$ la constante réelle moyenne dans la tranche 22. L'erreur est donc calculée sur l'intégrale de la hauteur de chaque tranche.

L'article « Formulation for stable and efficient implementation of the rigorous coupled-wave analysis of binary gratings » paru dans le Journal of Optical Society of America, vol.12, n°5, mai 1995, p.1068 à 1076, par Moharam et d'autres, donne des précisions sur la propagation de la lumière dans les arêtes 5 ou d'autres reliefs.

Selon l'invention, les épaisseurs $(Y_{k+1}-Y_k)$ des tranches 22 ne sont plus choisies arbitrairement, mais de façon que l'erreur d'obtention totale des spectres d'essai sur tout le relief modélisé, $E = \Sigma e_k$, devienne inférieure ou égale à un maximum admissible $E_{max}$. L'étape G du procédé consistera donc à ajuster la hauteur des tranches 22 composant l'arête 5 et à appliquer les formules précédentes de manière que $E = E_{max}$. L'arête 5 sera alors découpée de la meilleure façon, en conciliant une erreur réduite et un nombre de tranches 22 modéré qui aura l'avantage de ne pas accroître excessivement les temps de calcul.

Nous explicitons cet ajustement et abordons d'autres étapes du procédé de corrélation au moyen de la figure 5. L'arête 5 pourra être assimilée à un relief de forme simple, tel qu'un trapèze aux coins supérieurs arrondis, dans bien des cas pratiques. Cette forme peut être décrite au moyen de quatre paramètres, à savoir la hauteur h, l'angle des côtés t, la courbure r des coins supérieurs et la largeur f, par exemple à mi-hauteur. D'autres formes sont concevables.

Ces paramètres régissent la décomposition de l'arête 5 par laquelle les spectres d'essai sont obtenus, ainsi que la partie du procédé explicitée par la figure 4. Leurs valeurs sont inconnues à l'origine, puisqu'elles sont l'objet de l'étude, et doivent donc être déduites par des corrélations entre le spectre de mesure et les spectres d'essai les faisant varier de façon itérative pour améliorer la corrélation. Un spectre d'essai est calculé par groupe de valeurs que prennent les paramètres dans la progression du procédé. Unee première étape, qui peut être accomplie pour chaque jeu de paramètres ou pour certains d'eux seulement, est l'étape G, qui donne le nombre des tranches 22 optimal pour les valeurs courantes, ou des valeurs précédentes, peu différentes, des paramètres et après les critères précédents. Conformément à un autre aspect de l'invention, on détermine des classes des paramètres. En effet, un ajustement anarchique de ceux-ci pourrait échouer à donner la solution exacte du problème en ne convergeant que vers une solution locale. C'est pourquoi on se décide à faire varier les paramètres les uns après les autres pour réaliser l'ajustement, en commençant par les plus significatifs, c'est-à-dire ceux qui ont le plus d'influence sur le spectre d'essai.

Chacune des classes de paramètres peut comprendre un ou plusieurs paramètres. L'ajustement se fait d'abord en utilisant seulement les paramètres de la première classe. On peut ici juger que la hauteur et la largeur auront des importances comparables, de sorte que la première classe les comprendra toutes deux. Un cycle d'étape B, C et D est alors entrepris en ajustant les valeurs de f et h jusqu'à obtenir un minimum de différence entre le spectre de mesure et le dernier spectre d'essai. Un nouveau cycle d'étape B, C et D est alors entrepris en considérant aussi la deuxième classe de paramètres, qui comprend l'angle t : on fait varier cette fois à la fois les paramètres h, f et t. Enfin, un dernier cycle d'étapes B, C et D est entrepris en incorporant la troisième classe de paramètre, comprenant la courbure r, et en faisant donc varier tous les paramètres à la fois. Quand l'erreur minimale entre le spectre de mesure et le spectre d'essai a été trouvé, on considère que l'arête 5 a été trouvée.

Il est clair que l'invention pourrait être appliquée à d'autres formes d'arêtes.

## Revendications

1. Procédé d'étude d'une surface par réflectrométrie, comprenant des étapes de projection d'un rayonnement (2) sur la surface, de recueil d'un spectre de mesure du rayonnement après une réflexion (6) du rayonnement sur la surface et d'affichage du spectre sur un support graphique (9), ledit procédé comprenant encore des étapes de sélection de points du spectre (16, 17, 18, 19), les points pouvant être joints par des lignes approchant le spectre, et de recherche de reliefs (5) de la surface par des comparaisons des points sélectionnés du spectre de mesure à des points homologues d'un spectre d'essai, le spectre d'essai provenant d'une réflexion simulée du rayonnement sur une surface d'essai (5; 22) résultant d'une modélisation du relief exprimée par des paramètres, et comprenant des ajustements des comparaisons et du spectre d'essai par des ajustements des paramètres, **caractérisé en ce que** les paramètres sont ajustés successivement dans un ordre déterminé par une sensibilité du spectre d'essai audits paramètres, le ou les paramètres les plus influents sur ledit spectre étant ajustés en premier lieu et ainsi de suite.

2. Procédé selon la revendication 1, **caractérisé en ce que** le relief est modélisé par un empilement de tranches défini par un nombre de tranches dans l'empilement et des hauteurs et des largeurs des sections de tranches, le nombre ainsi que les hauteurs et largeurs étant déterminés à partir d'une erreur totale et d'une constante de propagation du rayonnement.

3. Procédé selon la revendication 2, **caractérisé en ce que** l'erreur pour chaque tranche est définie par l'intégrale sur une hauteur de la tranche, de la valeur absolue de la différence entre la constante de propagation du relief et la constante de propagation moyenne de la tranche.

4. Procédé selon la revendication 3, **caractérisé en ce que** la somme des erreurs de toutes les tranches est égale à une valeur maximum admissible.

5. Procédé d'étude d'une surface par réflectométrie suivant l'une quelconque des revendications précédentes, **caractérisé en ce que** les paramètres les plus influent comprennent une hauteur et une largeur des reliefs, qui sont modifiés d'abord dans les ajustements.

**6.** Procédé d'étude d'une surface par réflectométrie suivant la revendication 5, **caractérisé en ce que** les paramètres comprennent une pente et un arrondi des reliefs, qui sont modifiés dans cet ordre dans les ajustements, et après la hauteur et la largeur.

**7.** Procédé d'étude d'une structure par réflectométrie suivant l'une quelconque des revendications précédentes, **caractérisé en ce qu'**il comprend des ajustements de nombre d'étages (22) des reliefs utilisés pour obtenir le spectre d'essai.

## Patentansprüche

**1.** Verfahren zur Untersuchung einer Oberfläche durch Reflektometrie, das Schritte zum Projizieren einer Strahlung (2) auf die Oberfläche, zum Auffangen eines Messspektrums der Strahlung nach einer Reflexion (6) der Strahlung auf der Oberfläche und zum Anzeigen des Spektrums auf einer graphischen Anzeige (9) umfasst, wobei das genannte Verfahren auch noch Schritte zur Selektion von Spektrumspunkten (16, 17, 18, 19) - wobei die Punkte durch das Spektrum annähernde Linien verbunden werden können -, und zur Suche von Reliefs (5) der Oberfläche durch Vergleiche der selektierten Punkte des Messspektrums mit homologen Punkten eines Prüfspektrums umfasst, wobei das Prüfspektrum von einer simulierten Reflexion der Strahlung auf einer Prüfoberfläche (5; 22) stammt, die aus einer durch Parameter ausgedrückten Modellierung des -Reliefs resultiert, und Anpassungen der Vergleiche und des Prüfspektrums durch Anpassungen der Parameter umfasst,
**dadurch gekennzeichnet, dass** die Parameter sukzessiv in einer Reihenfolge angepasst werden, die durch eine Empfindlichkeit des Prüfspektrums für die genannten Parameter bestimmt wird, wobei der oder die einflussreichsten Parameter zuerst angepasst werden und so fort.

**2.** Verfahren nach Anspruch 1, **dadurch gekennzeichnet, dass** das Relief durch einen Scheibenstapel modelliert wird, definiert durch eine Anzahl von Scheiben in dem Stapel und Höhen und Breiten der Scheibenquerschnitte, wobei die Anzahl sowie die Höhen und Breiten aufgrund eines Gesamtfehlers und einer Ausbreitungskonstante der Strahlung bestimmt werden.

**3.** Verfahren nach Anspruch 2, **dadurch gekennzeichnet, dass** der Fehler für jede Scheibe durch das Integral - über eine Höhe der Scheibe - des Absolutwerts der Differenz zwischen der Ausbreitungskonstanten des Reliefs und der mittleren Ausbreitungskonstanten der Scheibe definiert wird.

**4.** Verfahren nach Anspruch 3, **dadurch gekennzeichnet, dass** die Summe der Fehler aller Scheiben gleich einem maximal zulässigen Wert ist.

**5.** Verfahren zur Untersuchung einer Oberfläche durch Reflektometrie nach einem der vorangehenden Ansprüche, **dadurch gekennzeichnet, dass** die einflussreichsten Parameter eine Höhe und eine Breite der Reliefs umfassen, die bei den Anpassungen zuerst modifiziert worden sind.

**6.** Verfahren zur Untersuchung einer Oberfläche durch Reflektometrie nach Anspruch 5, **dadurch gekennzeichnet, dass** die Parameter eine Neigung und eine Rundung der Reliefs, die bei den Anpassungen in dieser Reihenfolge modifiziert werden, und danach die Höhe und die Breite umfassen.

**7.** Verfahren zur Untersuchung einer Struktur durch Reflektometrie nach einem der vorangehenden Ansprüche, **dadurch gekennzeichnet, dass** es Anpassungen der Anzahl der Stufen (22) der zur Erlangung des Prüfspektrums benutzten Reliefs umfasst.

## Claims

**1.** A method for studying a surface by reflectometry, comprising steps for projecting a radiation (2) on the surface, collecting a measurement spectrum of the radiation after reflection (6) of the radiation on the surface and displaying the spectrum on a graphic medium (9), the method further comprising steps for selecting points of the spectrum (16, 17, 18, 19), the points being able to be joined by lines approaching the spectrum, and seeking relief features (5) of the surface by comparisons of selected points of the measurement spectrum with homologous points of a test spectrum, the test spectrum coming from a simulated reflection of the radiation on a test surface 5; 22) resulting from modelling the relief as expressed by parameters, and comprising adjustments of the comparisons and of the test spectrum by adjustments of the parameters, **characterized in that** the parameters are successively adjusted in an order determined by a sensitivity of the test spectrum to said parameters, the most influential parameter (s) on said spectrum being adjusted first and so forth.

**2.** The method according to claim 1, **characterized in that** the relief is modelled by a stack of slices defined by a number of slices in the stack and heights and widths of the sections of slices, the number as well as the heights and widths being determined from a total error and from a propagation constant of the radiation.

3. The method according to claim 2, **characterized in that** the error for each slice is defined by the integral over a height of the slice, of the absolute value of the difference between the propagation constant of the relief and the average propagation constant of the slice.

4. The method according to claim 3, **characterized in that** the sum of the errors of all the slices is equal to a maximum acceptable value.

5. The method for studying a surface by reflectometry according to any of the preceding claims, **characterized in that** the most influential parameters comprise a height and width of the relief features, which are changed in the adjustments first.

6. The method for studying a surface by reflectometry according to claim 5, **characterized in that** the parameters comprise a slope and a rounding of the relief features, which are changed in this order in the adjustments, and after the height and the width.

7. The method for studying a structure by reflectometry according to any of the preceding claims, **characterized in that** it comprises adjustments of the number of levels (22) of the relief features used for obtaining the test spectrum.

FIG. 1

À — OBTENTION D'UN SPECTRE DE MESURE

B — OBTENTION D'UN SPECTRE D'ESSAI

C — COMPARAISON

E — ADDITION DE PARAMETRES

G — NOUVELLE DEFINITION

AJUSTEMENT DE PARAMETRES — D

PARAMETRES DEFINITIFS — F

# FIG. 2

FIG. 3

EP 1 576 338 B1

FIG. 4

FIG. 5